# EUROPEAN PATENT APPLICATION

(11) **EP 3 093 217 A1**
(43) Date of publication of application: **16.11.2016**
(21) Application number: 16170005.9
(22) Date of filing: 17.05.2016
(51) Int. Cl.: B62D 7/14, B62D 13/04

(54) **STEERABLE WHEEL SET AND VEHICLE EQUIPPED THEREWITH**

(30) Priority: 15.05.2015 NL 2014810
(71) Applicant: Koninklijke Nooteboom Group B.V., 6603 BV Wijchen (NL)
(72) Inventor: ILMER, Martinus Tieme, 3831 NL LEUSDEN (NL)
(74) Representative: Bartelds, Erik

(57) **Abstract**

The invention relates to a steerable wheel set (9). This wheel set (9) comprises a pivotable wheel support arm (12) with a lower arm part which supports at or close to a first outer end at least one lying wheel axle (15) on which at least one wheel is rotatably mounted, and an upper arm part which comprises at or close to a first outer end means for connecting the wheel set (9) to a vehicle (1) for pivoting about a vertical axis. The lower and upper arm part are mutually connected at the position of their respective second outer ends for pivoting about an axis substantially parallel to the at least one wheel axle (15). The connecting means comprise an upright shaft part which is received pivotally in a bearing bush to be mounted on the vehicle (1) or to be integrated therein. The bearing bush can comprise a substantially cylindrical part and a flange (33) protruding therefrom, and the flange (33) can be configured to be mounted on the vehicle (1) or to be integrated therein.

The invention also relates to a vehicle (1), in particular a pulled vehicle (1), with a chassis (2) which has as seen in the travel direction a front side (3), a rear side (4), a left side and a right side (5), and an undercarriage (8) comprising at least two wheel sets (9), each placed along one of the sides. The chassis (2) can here define a floor (11) part, and the bearing bush of each wheel set (9) can be mounted on an underside of the floor (11) part or integrated therein.

## Description

The invention relates to a steerable wheel set comprising a pivotable wheel support arm with a lower arm part which supports at or close to a first outer end at least one lying wheel axle on which at least one wheel is rotatably mounted, and an upper arm part which comprises at or close to a first outer end means for connecting the wheel set to a vehicle for pivoting about a vertical axis, wherein the lower and upper arm part are mutually connected at the position of their respective second outer ends for pivoting about an axis substantially parallel to the at least one wheel axle. Such a steerable wheel set is known, for instance from applicant's earlier patent EP 1 577 159, and combines large compressing and extending movements with a compact construction.

This earlier document describes a pulled vehicle, in particular a low-loader, with an undercarriage with pivoted axle wheel sets in combination with a deep and wide recess between the wheel sets for receiving for instance the arm of an excavator. In order to be able to steer the low-loader each pivoted axle wheel set is here suspended pivotally from a part of the chassis lying thereabove by means of a slewing ring. A drawback of the use of a slewing ring for the steering is however that it has to be placed above the wheel set, whereby the overall construction of the wheel set becomes relatively high. Because the individual height of the vehicle determines the possible height of the load in transport vehicles, it is of great importance to keep the construction of the vehicle as low as possible. This is particularly the case for low-loaders, which are intended to transport heavy loads of large dimensions, and particularly for semi-low-loaders, where the load is placed over the wheel sets.

Proposals have already been made to solve this problem by allowing each wheel set to rotate about a steering head bearing with a simple shaft stub which protrudes downward from the construction lying thereabove. The wheel support arm is provided for this purpose with a bearing bush which is arranged around the shaft stub. This has the drawback that the shaft stub and the bearing bush placed therearound must be able to slot between the wheels of the pivoted axle wheel set when the travelling height is reduced. This situation, together with the space necessary for the pivoting movement, ultimately determines the minimal distance between the wheels, and thereby the width of the wheel set. Because the occurring forces are great - low-loaders are usually involved in heavy transport - the shaft stub and the bearing bush have to take a relatively large and heavy form, whereby the wheels have to be relatively far apart - at least compared to a steerable wheel set with slewing ring. The wider the wheel set, the less space remains between the wheel sets for the boom accommodating recess. In addition, the construction from which the shaft stub protrudes must take a relatively heavy form, for instance the form of a heavy tube, whereby the height of the vehicle increases, also because in the compressed situation the tyres must also remain clear of the tube during sharp steering movements.

In addition, there has been growing interest in recent years in independent wheel suspensions for use in pulled vehicles. This has to do with the fact that in some countries, particularly Germany, the legal maximum allowable axle load of vehicles with independent wheel suspension is considerably higher than that for vehicles with rigid through-shafts. An independent wheel suspension can be constructed narrower than a pivoted axle suspension under determined conditions, but has other drawbacks. The maximum achievable stroke during compression and extension is thus relatively limited in the case of a suspension with dual triangular support arms because large suspension movements result in great changes in the track width, which have an adverse effect on the road performance of the vehicle. Large suspension movements are however often necessary for a transport vehicle. The same drawback applies for a MacPherson strut. Pulled vehicles with MacPherson strut are known wherein the lower support arms are in each case extended to the opposite side of the vehicle in order to minimize the change in track width due to the compression and extension. This solution in turn has the drawback that suspension elements have to be passed under the vehicle, which results in a height increase of the vehicle if the ground clearance remains the same, or leaves less height for a chassis beam or boom accommodating recess.

The invention has for its object to provide a compact and structurally simple steerable wheel set, wherein the above stated problems do not occur, or at least do so to lesser extent. This is achieved according to the invention in that the connecting means comprise an upright shaft part which is received pivotally in a bearing bush to be mounted on the vehicle or to be integrated therein. By as it were reversing the construction of the bearing, with a shaft stub on the wheel support arm and a bearing bush on the vehicle, a more efficient construction is obtained which, with smaller dimensions and material thicknesses, can support a similar load as the above described conventional wheel suspension with steering head bearing.

The upright shaft part is preferably placed in a recess in the wheel support arm. The overall height of the wheel set is hereby limited. The upright shaft part can here advantageously have an end surface situated at substantially the same height as an upper side of the wheel support arm. Optimal use is thus made of the space present on the underside of a vehicle.

In order to further minimize the overall height it is recommended for dimensions in height direction of the bearing bush and the upright shaft part to substantially correspond. The bearing bush preferably extends here in the recess in the wheel support arm.

In order to be able to properly withstand the occurring loads, the upright shaft part can be manufactured integrally with at least the outer end of the wheel support arm.

In order to limit as far as possible wear resulting from the relative movements of the different parts of the wheel set, the upright shaft part can have at least one lubrication duct. The bearing can hereby be lubricated periodically or continuously.

For an optimal distribution of applied lubricants it is recommended for the at least one lubrication duct to run in axial direction and to debouch into a free end surface of the upright shaft part. Lubricants can thus be introduced into the bearing through the upright shaft part.

A relatively compact construction is obtained when the upright shaft part has an axial bore in which a retaining member is secured, which retaining member protrudes in radial direction outside the upright shaft part for retaining in axial direction at least one bearing arranged between the upright shaft part and the bearing bush. It is thus possible to dispense with an external lock nut on the upright shaft part.

The lubrication duct can in that case advantageously continue in the retaining member and debouch into or close to a free end surface thereof.

The bearing bush advantageously has an end wall in order to protect the bearing against penetration of dust and dirt.

It is advantageous in this case when a space connecting to the at least one bearing is formed between the outlet of the lubrication duct and the end wall of the bearing bush. A continuous connection is thus formed from the lubrication duct in the upright shaft part, via the lubrication duct in the retaining member and the space between outlet and end wall, and to the bearing/bearings. Lubricants can thus be guided through the bearing/bearings in dynamic manner instead of being introduced into a space in the vicinity of a bearing in static manner, as happens in a conventional bearing.

The end wall can comprise a releasable cover in order to facilitate inspection and maintenance of the bearing.

In order to ensure that the bearing will be able to withstand the loads acting thereon, it is recommended for the bearing bush to comprise a substantially cylindrical part and a flange protruding therefrom, and for the flange to be configured to be mounted on the vehicle or to be integrated therein. A large force-transmitting area is created by the protruding flange.

In respect of the magnitude of the occurring loads the flange is preferably formed integrally with the cylindrical part, for instance by means of forging.

A minimal overall height is obtained when the flange lies substantially in the same plane as the end wall.

Likewise with a view to transmitting the high loads, the bearing bush can be provided with a thickened transition part lying between the flange and the cylindrical part.

A relatively narrow wheel set is obtained when the upright shaft part has a diameter smaller than a width dimension of the wheel support arm. What also helps here is that at least the cylindrical part of the bearing bush, which determines the distance between the wheels in the fully compressed situation of the wheel set, has a diameter smaller than or equal to a width dimension of the wheel support arm, and preferably substantially corresponding thereto.

In order to maximize the force-transmitting area the flange preferably has a diameter greater than the width dimension of the wheel support arm.

The bearing according to the invention is particularly suitable for application in a pivoted axle wheel set, where the at least one wheel axle is mounted for pivoting about a shaft extending substantially in the travel direction and extends on either side of the wheel support arm, wherein wheels are mounted on either side of the wheel support arm.

For an optimal stability it is recommended for the upper arm part to extend forward from the upright shaft part as seen in the travel direction of the vehicle, and for the lower arm part to extend rearward from the pivoting connection to the upper arm part. There is then a trailing arm or trailing link wheel suspension.

The wheel set can be provided here with a spring/damper unit arranged between the upper and lower arm part. This spring/damper unit can take a pneumatic or hydraulic form and can therefore be moved to a desired (travelling) height, for instance for loading the vehicle or for passing obstacles such as viaducts and the like.

Because the wheel set is steerable, it is provided with steering means, connected to the wheel support arm, for pivoting the wheel support arm in the bearing bush.

These steering means can comprise a steering arm which is mounted on the wheel support arm and which can be connected to a steering mechanism of the vehicle.

In order to prevent the steering being influenced by compressing and extending movements, it is recommended for the steering means to be connected to the upper arm part.

When the steering means comprise a steering rod extending from a free outer end of the steering arm to another wheel set, steering movements of different wheel sets can be coordinated.

The invention also relates to a vehicle, in particular a pulled vehicle, comprising a chassis which has as seen in the travel direction a front side, a rear side, a left side and a right side, and an undercarriage comprising at least two wheel sets, each placed along one of the sides. The wheel sets can then be embodied as described above.

When the chassis defines a floor part, the bearing bush of each wheel set is preferably mounted on an underside of the floor part or integrated therein. A minimal height of the vehicle is thus achieved.

When the floor part is formed by a solid plate at the position of the bearing bush, great loads can, at a relatively small overall height, still be transmitted.

A very compact yet strong construction is achieved when the bearing bush is received in an opening in the floor part and its flange is welded to an edge of the opening.

For an optimum load transfer and distribution it is recommended for the flange to have a thickness substantially corresponding to a thickness of the floor part.

When a number of wheel sets is placed one behind the other in the travel direction along each side, the steering means of successive wheel sets can be mutually connected so as to enable a coordinated steering of the vehicle.

The steering arms of successive wheel sets can in this case advantageously be connected to each other by a steering rod arranged therebetween.

The invention will now be elucidated on the basis of two embodiments, wherein reference is made to the accompanying drawing in which corresponding components are designated with reference numerals increased in each case by 100, and in which:
Fig. 1 is a perspective view of a pulled vehicle with seven axes, each formed by a left-hand and a right-hand wheel set according to a first embodiment of the invention, embodied as pivoted axle wheel sets,

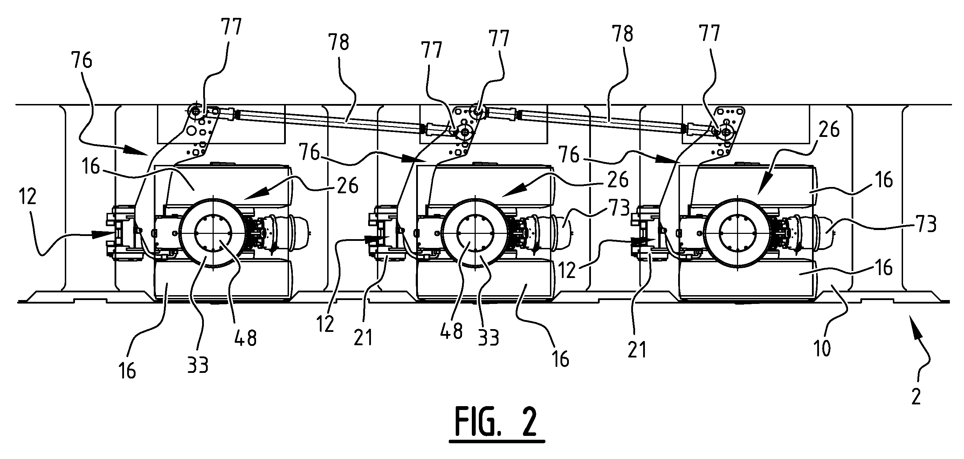

Fig. 2 is a partially cut-away top view of three wheel sets on the left side of the vehicle of Fig. 1,

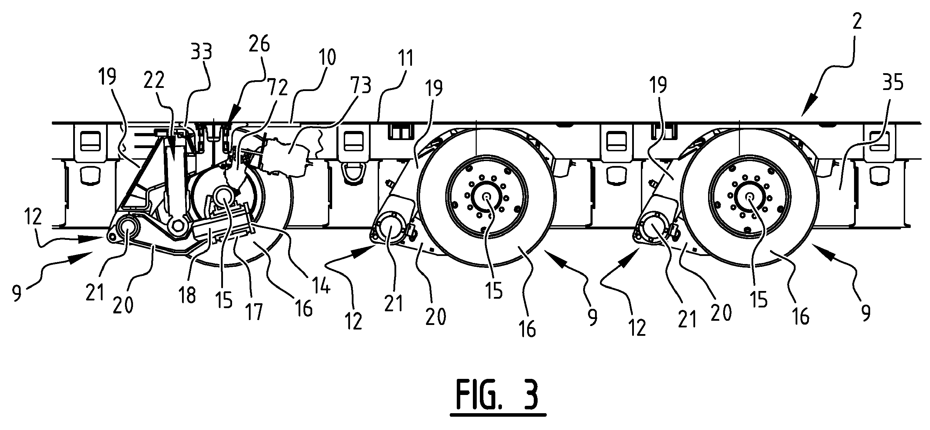

Fig. 3 is a partly cross-sectional side view of the three wheel sets of Fig. 2 in fully compressed situation,

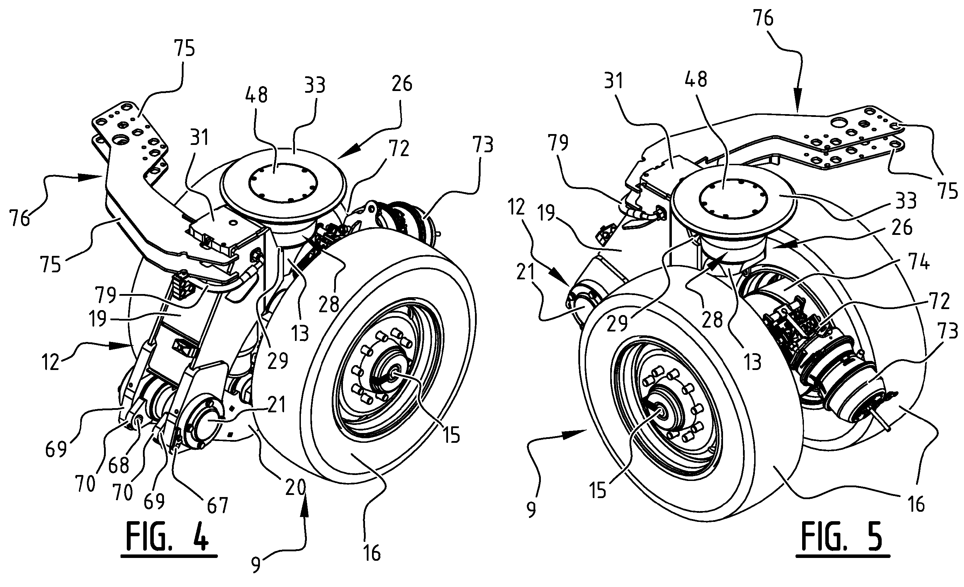

Fig. 4 is a perspective front view of a wheel set according to the first embodiment in a running position, between the compressed and extended situation,
Fig. 5 is a perspective rear view of the wheel set of Fig. 4,

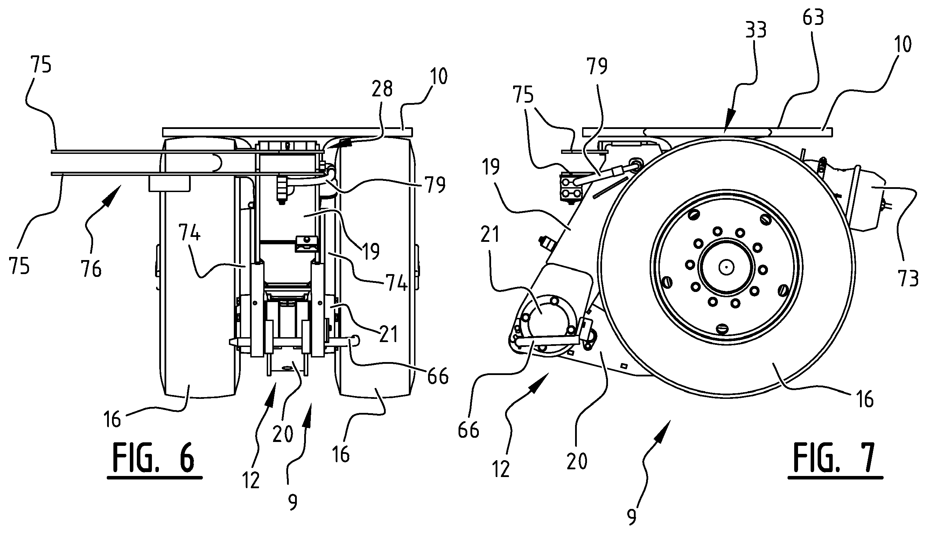

Fig. 6 is a front view of a wheel set according to the first embodiment in compressed situation, wherein a part of a floor of the vehicle is also shown,
Fig. 7 is a side view of the wheel set and floor part of Fig. 6,

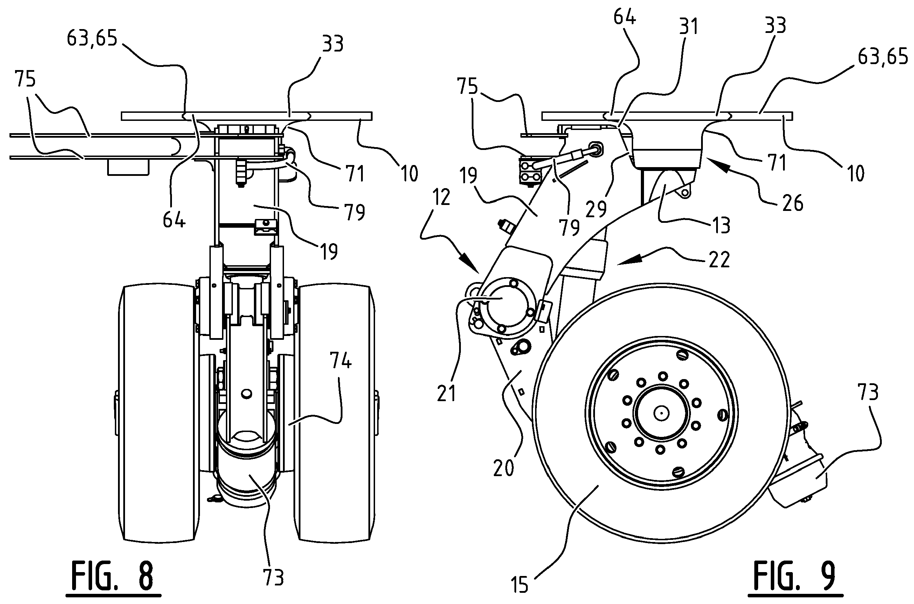

Fig. 8 and 9 are views corresponding to Fig. 6 and 7 of the wheel set in fully extended position,

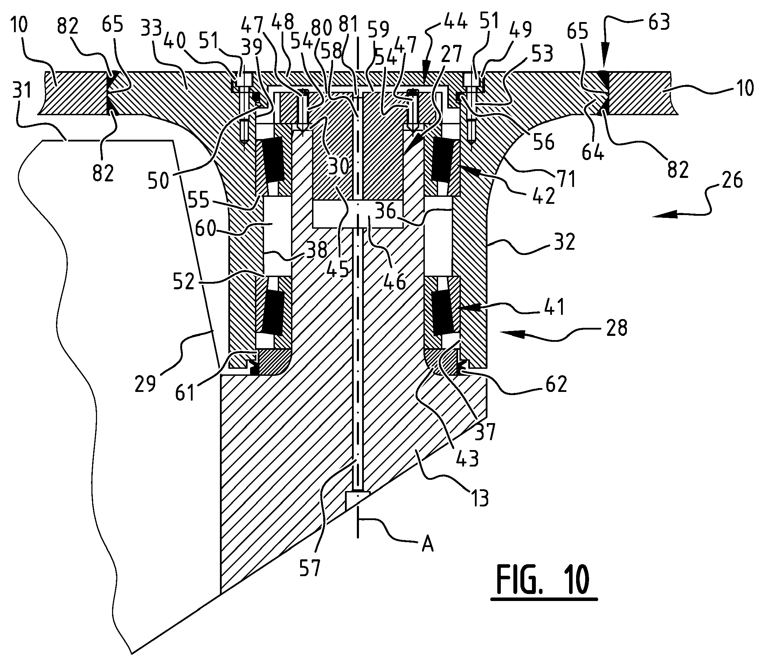

Fig. 10 is a cross-sectional detail view of an upright shaft part and bearing bush of a wheel set according to the invention,

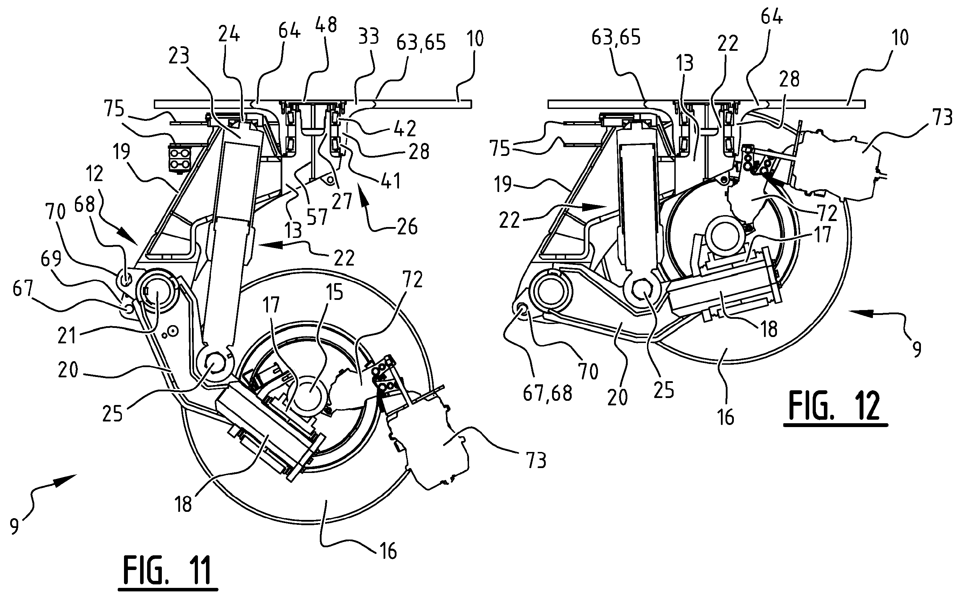

Fig. 11 and 12 are cross-sections showing the wheel set according to the first embodiment in respectively the fully extended and the fully compressed situation,
Fig. 13 is a transparent perspective top view of the bearing bush of Fig. 10 in a floor part of the vehicle, and
Fig. 14 is a schematic front view of an alternative embodiment of the steerable wheel set according to the invention as part of an independent wheel suspension.

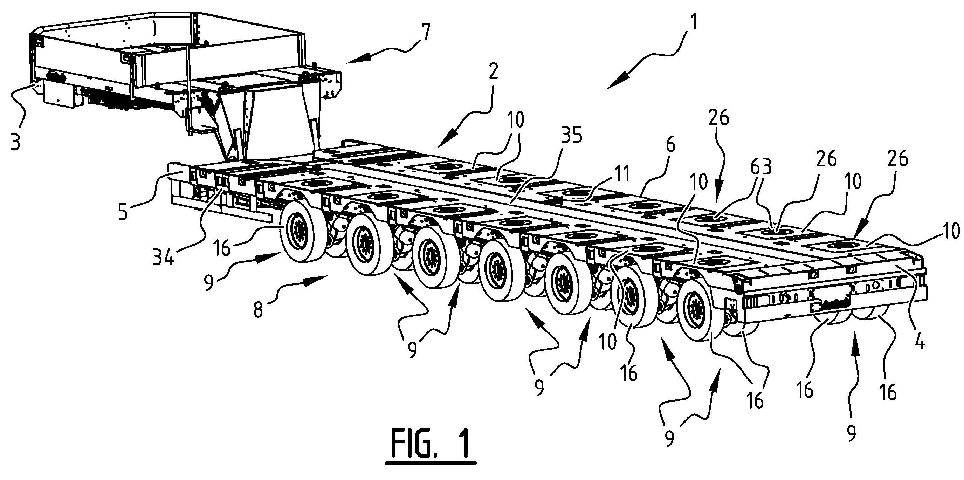

A pulled vehicle or trailer 1 (Fig. 1), here in the form of a semi-low-loader, comprises a chassis 2 with a front side 3, a rear side 4 and left and right sides 5, 6. Arranged on front side 3 of chassis 2 is a swan-neck 7 with which vehicle 1 can be coupled to a tractive vehicle (not shown here). Chassis 2 of vehicle 1 is carried by an undercarriage 8 comprising a number of wheel sets 9 arranged along left and right sides 5, 6. Each pair of wheel sets 9 lying opposite each other forms an axis, of which shown vehicle 1 has seven. With a view to the manoeuvrability of vehicle 1, the wheel sets 9 lying furthest from the swan-neck in any case take a steerable form. All wheel sets 9 will usually be steerable in practice.

Chassis 2, and thereby vehicle 1, can take an extensible form. A division 34 can be formed for this purpose between swan-neck 7 and the front axis, and a central beam 35 of chassis 2 can take a telescopic form. Vehicle 1 can also take a divisible form, whereby an auxiliary vehicle or dolly can be arranged between swan neck 7 and the load-bearing part of vehicle 1 when the load has to be distributed over more axes. For steering of wheel sets 9 use can then be made of a steering system as described in applicant's earlier patent EP 2 540 595B1, the content of which should be deemed as incorporated herein.

Wheel sets 9 are placed under a part 10 of a loading floor 11 of chassis 2. In order to have as much space as possible for transport of large and high loads, it is important that loading floor 11 of vehicle 1 lies as close as possible to the road surface. The overall height of wheel sets 9 has to be as small as possible for this purpose.

Each wheel set 9 is provided with a divided, pivoting wheel support arm 12 which is pivotally connected at or close to its upper outer end 13 to chassis 2 by connecting means 26. Wheel support arm 12 supports at or close to its lower outer end 14 a wheel axle 15 on which two wheels 16 are rotatably mounted in the shown example. In the embodiment shown here wheel axle 15 is mounted on a bush 17, which is mounted pivotally on an axle body 18 on lower outer end 14 of wheel support arm 12, whereby wheels 16 can perform a pivoting movement. Wheels 16 can hereby follow unevennesses in the road surface or the ground, so that an optimal distribution of the wheel loads over the road surface or the ground is always ensured. Because of this pivoting capability the legal maximum allowable axle load of wheel set 9 is clearly higher than that of a rigid shaft.

As also described in applicant's earlier patent EP 1 577 159 B1, the distance between the two wheels 16 on pivoted wheel axle 15 is as small as possible so as to obtain the narrowest possible wheel set 9. More space remains free hereby in the central part of vehicle 1 between wheel sets 9, which space can for instance be utilized to form a boom accommodating recess.

As stated, wheel support arm 12 takes a divided and pivoting form and comprises an upper arm part 19, which supports the connecting means 26 to chassis 2, and a lower arm part 20 which bears wheels 16. The two arm parts 19, 20 are connected hingedly or pivotally to each other by a pivot shaft 21, which is substantially parallel to wheel axle 15. Upper arm part 19, also referred to as 'arch', extends forward and obliquely downward from the pivoting connection to chassis 2 as seen in the travel direction of vehicle 1, while lower arm part 20 extends rearward from pivot shaft 21. This lower arm part 20 thus forms a trailing arm or trailing link. Depending on the degree to which wheel set 9 is compressed or extended, lower arm 20 extends substantially horizontally or obliquely downward.

A spring/damper unit 22 is arranged between upper arm part 19 and lower arm part 20. An upper outer end 23 of this spring/damper unit 22 is here received pivotally in a thrust bearing 24 in upper arm part 19, just in front of the pivoting connection to chassis 2. A lower outer end 25 is mounted pivotally on lower arm part 20, roughly halfway between front pivot shaft 21 and wheel axle 15. Spring/damper unit 22 can take a pneumatic or hydraulic form and is connected via a conduit 79 to a hydraulic or pneumatic system of vehicle 1. Spring/damper unit 22 not only serves for compression and extension and for damping movements during travel of vehicle 1, but also to set a desired (travelling) height. Each wheel set 9 can thus be moved to a fully compressed position, wherein loading floor 11 lies as close as possible to the road surface or the ground, for loading or unloading of the vehicle. During travel the spring/damper units 22 will set a travelling height or leave a ground clearance such that vehicle 1 does not come into contact with the road surface. In the case of low-loaders a minimal ground clearance of about 10-20 cm, preferably 15 cm, is observed for this purpose. The travelling height can however be temporarily reduced again in order to pass obstacles such as viaducts and the like. The configuration of the upper and lower arm part 19, 20 and of axle body 18 is chosen here such that, at an optimal travelling height, axle body 18 runs substantially horizontally, i.e. in the travel direction. When vehicle 1 is then moved by compression or extension, axle body 18 comes to lie in a slightly obliquely upward or downward position.

Wheel support arm 12 can otherwise be locked in the fully compressed situation by means of a pin 66 which can be inserted through holes 67, 68 in protruding ears 69, 70 of the upper and lower arm part 19, 20. One or more wheel sets 9 can hereby be kept clear of the road surface during travel, for instance when vehicle 1 is travelling with light load or entirely free of load. Unnecessary wear of wheel sets 9 is thus prevented.

According to the invention, connecting means 26 between wheel support arm 12 and chassis 2 comprise an upright shaft part 27 which is arranged on or close to the upper outer end 13 of wheel support arm 12. According to the invention, this upright shaft part 27 is received pivotally in a bearing bush 28, which is mounted on chassis 2 of vehicle 1 or is integrated therein. In order to limit the overall height of wheel set 9 the upright shaft part 27 is in this example placed in a recess 29 in upper arm part 19. Upright shaft part 27 here has an end surface 30 situated substantially at the same height as the upper side 31 of wheel support arm 12.

Bearing bush 28 has a substantially cylindrical body 32 and on the upper side a flange 33 which extends in radial direction and whereby bearing bush 28 is mounted on floor part 10 of chassis 2. The height of bearing bush 28, or in any case the height of the cylindrical body 32 thereof protruding under floor part 10, is substantially equal here to the height of upright shaft part 27. In respect of the occurring loads, flange 33 is in the shown example formed integrally with cylindrical body 32. Bearing bush 28 is in this example embodied as a forging.

Bearing bush 28 has a central bore 36 which takes a stepped form, with a part 37 directed toward wheel support arm 12 and having a relatively large diameter, a narrowed middle part 38 and a second part with a large diameter 39. Finally, bore 36 also has a shallow part 40 with a maximum diameter. The transitions between the two parts 37, 39 with a large diameter and the central, narrowed part 38 form two stops 52, 55 for fixing two bearings 41, 42 in axial direction. Because of these bearings the upright shaft part 27 of wheel support arm 12 can pivot about a vertical axis A. Lower bearing 41 is closed on the inner side, i.e. the side of upright shaft part 27, by a support ring 43 arranged around upright shaft part 27. Upper bearing 42 is retained on the shaft side by a retaining member 44 protruding in radial direction outside upright shaft part 27. This retaining member 44 has a central part 45 with external screw thread, which is secured in a bore 46 with internal screw thread in upright shaft part 27. When retaining part 44 has been screwed into bore 46 of upright shaft part 27, it is secured against unintended loosening by unscrewing or loosening by vibration by a number of locking screws 47 which are screwed into holes 54 of retaining member 44 and which support against end surface 30 of upright shaft part 27.

Bore 36 in bearing bush 28 is closed by an end wall, here in the form of a releasable cover 48. This cover 48 has a peripheral edge 49 which is received close-fittingly in the widest part 40 of bore 36, and an inward protruding edge 50 which is received close-fittingly in the second widened bore part 39. Provided between edge 50 and the wall of bore 36 is a seal 56, for instance in the form of an O-ring. Cover 48 is mounted on bearing bush 28 by a number of bolts 51 which protrude into recessed holes in cover 48 and are secured in bores 53 in the wall of bearing bush 28.

In respect of the occurring loads, upright shaft part 27 is solid and embodied integrally with an end part 13 of wheel support arm 12. Formed in this end part 13 and upright shaft part 27 is a lubrication duct 57 which is accessible from the underside of upper arm part 19. This lubrication duct 57 debouches in the first instance into internal bore 46 in upright shaft part 27 and is continued through a duct 58 in retaining part 44. From there, lubrication duct 57, 58 debouches into groove 81, which is open on the upper side and is connected to a slightly disc-shaped space 59 between an end surface 80 of retaining part 44 and the end wall 48 of bearing bush 28. Groove 81 and disc-shaped space 59 are further connected to an annular space 60 between bearing bush 28 and upright shaft part 27. Lubricants can in this way be guided via lubrication duct 57 in wheel support arm 12, bore 46, continued lubrication duct 58 in retaining member 44 and groove 81 and/or disc-shaped intermediate space 59 to the annular space 60, in which bearings 41, 42 are received. Groove 81 provides for an open connection, even if end wall 48 were to come to lie against end surface 80 under load. The lubricant is thus first pressed through upper bearing 42 and then through lower bearing 41, and finally leaves the space between bearing bush 28 and upright shaft part 27 via an annular gap 61 between cylindrical part 32 of bearing bush 28 and support ring 43. This annular gap 61 is sealed by a V-ring 62 which yields when the pressure on the lubricant becomes higher. A dynamic lubrication of the two bearings 41, 42 is thus achieved.

Flange 33 of bearing bush 28 is mounted on a floor part 10 of chassis 2. In the shown example an opening 63 is formed in floor part 10, in which flange 33 is received in close-fitting manner. The form and dimensions of the opening and flange 33 are thus adapted precisely to each other, but can be chosen differently than shown here. The mounting of flange 33 on floor part 10 is formed here by a welded connection along peripheral edge 64 of flange 33 and inner edge 65 of opening 63 in floor part 10. This is the only connection between wheel set 9 and chassis 2, and thus has to transmit all forces. In order to be able to absorb the loads acting on wheel set 9, floor part 10 must take a very strong and rigid form. In the shown example floor part 10 is embodied as a solid steel plate with a thickness such that it can absorb the loads without upright reinforcements or reinforcements protruding on the underside being necessary for this purpose. This is because upright reinforcements would increase the height of the construction, and thereby reduce the space available for the load above floor 11 accordingly. On the other hand, reinforcements protruding on the underside could obstruct the swivelling movement of wheels 16 during steering. In order to be able to properly absorb the loads acting on wheel sets 9, a plate thickness in the order of several tens of mm is necessary. Plate thicknesses between 8 and 45 mm, and preferably between 12 and 35 mm, and more preferably between 15 and 25 mm are envisaged.

Flange 33 preferably has a similar thickness at the position of its peripheral edge 64 as the surrounding metal plate, whereby uneven transitions are prevented. In the shown example peripheral edge 64 of flange 33 is bevelled at the top and at the bottom, while inner edge 65 of opening 63 in floor part 10 is cylindrical. Triangular spaces are hereby created on the upper and underside after placing of flange 33 in opening 63, which spaces are completely filled by welding, thus forming a so-called double bevel groove weld 82. In the case of a continuous weld such a weld form results in a relatively small weld volume, whereby the time required to form the weld remains limited.

As stated, the distance between the wheels 16 of each wheel set 9 is as small as possible in order to leave as much free space as possible between wheel sets 9 on the left and right side 5, 6 of vehicle 1. In the shown example this distance is not much greater than the width of wheel support arm 12, or at least the upper arm part 19 thereof. The dimensions of connecting means 26 are also adapted thereto. Bearing bush 28 has a diameter roughly corresponding to the width of wheel support arm 12, or at least upper arm part 19, while the standing shaft 27 received therein has of course a smaller diameter still. The diameter of flange 33 can be greater than the distance between the two wheels 16 and the width of wheel support arm 12, since flange 33 is received in floor part 10 and will not touch wheels 16. A thickened transition part 71 is formed between cylindrical part 32 and flange 33 of bearing bush 28 in order to transmit the loads while distributing them over the greatest possible area. Transition part 71 is here formed integrally with flange 33 and cylindrical part 32 and takes a curved form, wherein the radius is chosen such that wheels 16 are not touched thereby. The dimensions of the other components of each wheel set 9 are also chosen such that the most compact possible whole is obtained. A braking mechanism 72 with brake cylinder 73 thus fits precisely between brake drums 74 of wheels 16. Braking mechanism 72 is further connected via axle body 15 to bush 17 such that brake cylinder 73 in the fully extended position remains clear of the road surface, and in the fully compressed position remains clear of floor part 10 of vehicle 1.

For steering each wheel set 9 use is made of a pair of steering flaps 75 which are mounted on the front side of upper arm part 19 and together form a steering arm 76. With this mounting location it is prevented that the steering mechanism is subject to vertical displacements during compression and extension of wheel set 9. An outer end 77 of a steering rod 78 which connects wheel set 9 to an adjacent wheel set 9 is each time received in the space between steering flaps 75. Steering flaps 75 or steering arm 76 of the front or rear wheel set 9 are/is connected to a steering system of vehicle 1. As stated, use can be made for steering of a steering system according to EP 2 540 595 B1.

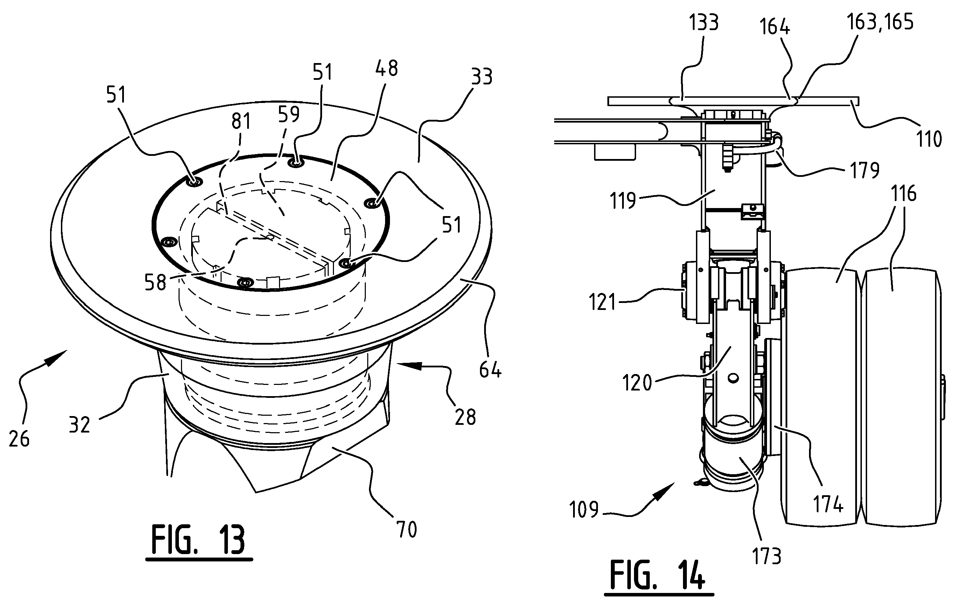

In an alternative embodiment of the invention (Fig. 14) wheel set 109 is not embodied as pivoted axle wheel set but as part of an independent wheel suspension. Wheel support arm 112 and the connecting means 126 to chassis 102 are in this embodiment in principle identical to the wheel support arm 12 and connecting means 26 of the first embodiment. The most important difference is that wheel axle 115 is here not pivotally but rigidly mounted on the lower outer end 114 of lower arm part 120. In the shown embodiment a so-called dual-tyre wheel 116, which in principle has a similar supporting force as the two wheels 16 of the first embodiment, is mounted on wheel axle 115.

The invention also relates to a steerable wheel set and a vehicle equipped therewith according to one or more of the following clauses:
Clause 1. Steerable wheel set comprising a pivotable wheel support arm with a lower arm part which supports at or close to a first outer end at least one lying wheel axle on which at least one wheel is rotatably mounted, and an upper arm part which comprises at or close to a first outer end means for connecting the wheel set to a vehicle for pivoting about a vertical axis, wherein the lower and upper arm part are mutually connected at the position of their respective second outer ends for pivoting about an axis substantially parallel to the at least one wheel axle, characterized in that the connecting means comprise an upright shaft part which is received pivotally in a bearing bush to be mounted on the vehicle or to be integrated therein.
Clause 2. Steerable wheel set according to clause 1, characterized in that the upright shaft part is placed in a recess in the wheel support arm.
Clause 3. Steerable wheel set according to clause 2, characterized in that the upright shaft part has an end surface situated at substantially the same height as an upper side of the wheel support arm.
Clause 4. Steerable wheel set according to any of the foregoing clauses, characterized in that dimensions in height direction of the bearing bush and the upright shaft part substantially correspond.
Clause 5. Steerable wheel set according to clauses 3 and 4, characterized in that the bearing bush extends in the recess in the wheel support arm.
Clause 6. Steerable wheel set according to any of the foregoing clauses, characterized in that the upright shaft part is manufactured integrally with at least the outer end of the wheel support arm.
Clause 7. Steerable wheel set according to any of the foregoing clauses, characterized in that the upright shaft part has at least one lubrication duct.
Clause 8. Steerable wheel set according to clause 7, characterized in that the at least one lubrication duct runs in axial direction and debouches into a free end surface of the upright shaft part.
Clause 9. Steerable wheel set according to any of the foregoing clauses, characterized in that the upright shaft part has an axial bore in which a retaining member is secured, which retaining member protrudes in radial direction outside the upright shaft part for retaining in axial direction at least one bearing arranged between the upright shaft part and the bearing bush.
Clause 10. Steerable wheel set according to clauses 8 and 9, characterized in that the lubrication duct continues in the retaining member and debouches into or close to a free end surface thereof.
Clause 11. Steerable wheel set according to any of the foregoing clauses, characterized in that the bearing bush has an end wall.
Clause 12. Steerable wheel set according to clauses 10 and 11, characterized in that a space connecting to the at least one bearing is formed between the outlet of the lubrication duct and the end wall of the bearing bush.
Clause 13. Steerable wheel set according to clause 11 or 12, characterized in that the end wall comprises a releasable cover.
Clause 14. Steerable wheel set according to any of the foregoing clauses, characterized in that the bearing bush comprises a substantially cylindrical part and a flange protruding therefrom, and the flange is configured to be mounted on the vehicle or to be integrated therein.
Clause 15. Steerable wheel set according to clause 14, characterized in that the flange is formed integrally with the cylindrical part, for instance by means of forging.
Clause 16. Steerable wheel set according to clauses 11 and 14 or 15, characterized in that the flange lies substantially in the same plane as the end wall.
Clause 17. Steerable wheel set according to any of the clauses 14-16, characterized by a thickened transition part lying between the flange and the cylindrical part.
Clause 18. Steerable wheel set according to any of the foregoing clauses, characterized in that the upright shaft part has a diameter smaller than a width dimension of the wheel support arm.
Clause 19. Steerable wheel set according to any of the foregoing clauses, characterized in that at least the cylindrical part of the bearing bush has a diameter smaller than or equal to a width dimension of the wheel support arm, and preferably substantially corresponding thereto.
Clause 20. Steerable wheel set according to any of the clauses 14-17 and clause 19, characterized in that the flange has a diameter greater than the width dimension of the wheel support arm.
Clause 21. Steerable wheel set according to any of the foregoing clauses, characterized in that the at least one wheel axle is mounted for pivoting about a shaft extending substantially in the travel direction and extends on either side of the wheel support arm, wherein wheels are mounted on either side of the wheel support arm.
Clause 22. Steerable wheel set according to any of the foregoing clauses, characterized in that the upper arm part extends forward from the upright shaft part as seen in the travel direction of the vehicle, and the lower arm part extends rearward from the pivoting connection to the upper arm part.
Clause 23. Steerable wheel set according to any of the foregoing clauses, characterized by a spring/damper unit arranged between the upper and lower arm part.
Clause 24. Steerable wheel set according to any of the foregoing clauses, characterized by steering means, connected to the wheel support arm, for pivoting the wheel support arm in the bearing bush.
Clause 25. Steerable wheel set according to clause 24, characterized in that the steering means comprise a steering arm which is mounted on the wheel support arm and which can be connected to a steering mechanism of the vehicle.
Clause 26. Steerable wheel set according to clause 24 or 25, characterized in that the steering means are connected to the upper arm part.
Clause 27. Steerable wheel set according to clause 25 or 26, characterized in that the steering means comprise a steering rod extending from a free outer end of the steering arm to another wheel set.
Clause 28. Vehicle, in particular a pulled vehicle, comprising:
   - a chassis which has as seen in the travel direction a front side, a rear side, a left side and a right side, and
   - an undercarriage comprising at least two wheel sets, each placed along one of the sides, according to any of the foregoing clauses.
Clause 29. Vehicle according to clause 28, characterized in that the chassis defines a floor part and the bearing bush of each wheel set is mounted on an underside of the floor part or integrated therein.
Clause 30. Vehicle according to clause 29, characterized in that the floor part is formed by a solid plate at the position of the bearing bush.
Clause 31. Vehicle according to clause 29 or 30, characterized in that the bearing bush is received in an opening in the floor part and its flange is welded to an edge of the opening.
Clause 32. Vehicle according to clause 31, characterized in that the flange has a thickness substantially corresponding to a thickness of the floor part.
Clause 33. Vehicle according to any of the clauses 28-32, characterized in that a number of wheel sets is placed one behind the other in the travel direction along each side and the steering means of successive wheel sets are mutually connected.
Clause 34. Vehicle according to clause 33, characterized in that the steering arms of successive wheel sets are connected to each other by a steering rod arranged therebetween.

The invention makes it possible to provide a very compact, steerable wheel set having a very small overall height and thus enabling a great load height. When making use of the wheel set according to the invention, the minimal height of the vehicle is in practice roughly equal to the sum of the diameter of the wheel in loaded situation and the thickness of the floor plate. Since use is made here of a solid floor plate, the thickness of which is smaller than the compression of the tyre in loaded situation, the minimal height of the vehicle in loaded situation will even be smaller than the diameter of the tyre in unloaded situation.

Although the invention has been elucidated above on the basis of a number of embodiments, it will be apparent that it is not limited thereto but can be varied in many ways. The scope of the invention is therefore defined solely by the following claims.

## Claims

1. Steerable wheel set comprising a pivotable wheel support arm with a lower arm part which supports at or close to a first outer end at least one lying wheel axle on which at least one wheel is rotatably mounted, and an upper arm part which comprises at or close to a first outer end means for connecting the wheel set to a vehicle for pivoting about a vertical axis, wherein the lower and upper arm part are mutually connected at the position of their respective second outer ends for pivoting about an axis substantially parallel to the at least one wheel axle, **characterized in that** the connecting means comprise an upright shaft part which is received pivotally in a bearing bush to be mounted on the vehicle or to be integrated therein, wherein the upright shaft part is optionally placed in a recess in the wheel support arm, and wherein the upright shaft part optionally has an end surface situated at substantially the same height as an upper side of the wheel support arm.

2. Steerable wheel set as claimed in claim 1, **characterized in that** dimensions in height direction of the bearing bush and the upright shaft part substantially correspond, wherein the bearing bush optionally extends in the recess in the wheel support arm and/or wherein the upright shaft part is optionally manufactured integrally with at least the outer end of the wheel support arm.

3. Steerable wheel set as claimed in claim 1 or 2, **characterized in that** the upright shaft part has at least one lubrication duct, wherein the at least one lubrication duct optionally runs in axial direction and debouches into a free end surface of the upright shaft part.

4. Steerable wheel set as claimed in any of the foregoing claims, **characterized in that** the upright shaft part has an axial bore in which a retaining member is secured, which retaining member protrudes in radial direction outside the upright shaft part for retaining in axial direction at least one bearing arranged between the upright shaft part and the bearing bush, wherein the lubrication duct optionally continues in the retaining member and debouches into or close to a free end surface thereof.

5. Steerable wheel set as claimed in any of the foregoing claims, **characterized in that** the bearing bush has an end wall, wherein a space connecting to the at least one bearing is optionally formed between the outlet of the lubrication duct and the end wall of the bearing bush and/or wherein the end wall optionally comprises a releasable cover.

6. Steerable wheel set as claimed in any of the foregoing claims, **characterized in that** the bearing bush comprises a substantially cylindrical part and a flange protruding therefrom, and the flange is configured to be mounted on the vehicle or to be integrated therein, wherein the flange is optionally formed integrally with the cylindrical part, for instance by means of forging, and/or wherein the flange optionally lies substantially in the same plane as the end wall, and/or the bearing bush is optionally provided with a thickened transition part lying between the flange and the cylindrical part.

7. Steerable wheel set as claimed in any of the foregoing claims, **characterized in that**:
the upright shaft part has a diameter smaller than a width dimension of the wheel support arm; and/or
at least the cylindrical part of the bearing bush has a diameter smaller than or equal to a width dimension of the wheel support arm, and preferably substantially corresponding thereto.

8. Steerable wheel set as claimed in claims 6 and 7, **characterized in that** the flange has a diameter greater than the width dimension of the wheel support arm.

9. Steerable wheel set as claimed in any of the foregoing claims, **characterized in that**:
the at least one wheel axle is mounted for pivoting about a shaft extending substantially in the travel direction and extends on either side of the wheel support arm, wherein wheels are mounted on either side of the wheel support arm; and/or
the upper arm part extends forward from the upright shaft part as seen in the travel direction of the vehicle, and the lower arm part extends rearward from the pivoting connection to the upper arm part.

10. Steerable wheel set as claimed in any of the foregoing claims, **characterized by**:
a spring/damper unit arranged between the upper and lower arm part; and/or
steering means, connected to the wheel support arm, for pivoting the wheel support arm in the bearing bush.

11. Steerable wheel set as claimed in claim 10, **characterized in that**:
the steering means comprise a steering arm which is mounted on the wheel support arm and which can be connected to a steering mechanism of the vehicle; and/or
the steering means are connected to the upper arm part; and/or
the steering means comprise a steering rod extending from a free outer end of the steering arm to another wheel set.

12. Vehicle, in particular a pulled vehicle, comprising:
- a chassis which has as seen in the travel direction a front side, a rear side, a left side and a right side, and
- an undercarriage comprising at least two wheel sets, each placed along one of the sides, as claimed in any of the foregoing claims.

13. Vehicle as claimed in claim 12, **characterized in that** the chassis defines a floor part and the bearing bush of each wheel set is mounted on an underside of the floor part or integrated therein, wherein the floor part is optionally formed by a solid plate at the position of the bearing bush.

14. Vehicle as claimed in claim 13, **characterized in that** the bearing bush is received in an opening in the floor part and its flange is welded to an edge of the opening, wherein the flange optionally has a thickness substantially corresponding to a thickness of the floor part.

15. Vehicle as claimed in any of the claims 12-14, **characterized in that** a number of wheel sets is placed one behind the other in the travel direction along each side and the steering means of successive wheel sets are mutually connected, wherein the steering arms of successive wheel sets are optionally connected to each other by a steering rod arranged therebetween.
